# EUROPÄISCHE PATENTANMELDUNG

(11) **EP 1 804 521 A2**
(43) Veröffentlichungstag der Anmeldung: **04.07.2007**
(21) Anmeldenummer: 06027085.7
(22) Anmeldetag: 29.12.2006
(51) Int. Cl.: H04N 17/00

(54) **Telekommunikationssignalmessvorrichtung**

(30) Priorität: 29.12.2005 ES 200500021
(71) Anmelder: TELEVES, S.A., 15706 Santiago de Compostela (ES)
(72) Erfinder: Loyacono Pardo, Gabriel, 15706 Santiago de Compostela (ES); Ledo Gavieiro, José Luis, 15706 Santiago de Compostela (ES); Paz Bugallo, Benito, 15706 Santiago de Compostela (ES)
(74) Vertreter: Dosterschill, Peter

(57) **Zusammenfassung**

Die Erfindung betrifft eine Telekommunikationssignalmessvorrichtung, insbesondere für Rundfunk- und Fernsehfunksignale mit einem System, das erkennt, ob ein zu messender Kanal ein analoger oder ein digitaler Kanal ist,.

Das System, das erkennt, ob der zu messende Kanal ein analoger Kanal oder ein digitaler Kanal ist, enthält ein erstes Filter (36) mit einer ersten Bandbreite (BW1), ein zweites Filter (37) mit einer zweiten Bandbreite (BW2), einen Detektor (38) und ein Steuerwerk (µP). Der Detektor (38) und das Steuerwerk (µP) arbeiten in der Weise zusammen, dass ein erstes Signal, das einen Signalpegel am Ausgang des ersten Filters (36) bezeichnet, und ein zweites Signal, das einen Signalpegel am Ausgang des zweiten Filters (37) bezeichnet, in der Weise miteinander verknüpft werden, dass für einen ersten Fall, bei dem die Differenz der beiden Signale im wesentlichen größer als 10 db ist, ein Kanal als analoger Kanal erkannt wird, und dass für einen zweiten Fall, bei dem die Differenz der beiden Signale im wesentlichen gleich 10 log (BW1/BW2) ist, insbesondere in der Größenordnung von 2 bis 3 db, ein Kanal als digitaler Kanal erkannt wird.

## Beschreibung

Die vorliegende Erfindung betrifft eine Telekommunikationssignalmessvorrichtung, insbesondere für Fernsehfunksignale, nach Anspruch 1.

Gegenwärtig gibt es auf dem Markt verschiedene Telekommunikationssignalmessvorrichtungen. Die Patentanmeldungen ES 200301644, ES 2003-1659 beschreiben Messvorrichtungen mit verschiedenartigen Kennzeichen wie der Eingliederung eines Versorgungsladesystems durch Batterie, bei dem die Auswahl des Ladeverfahrens der Batterie automatisch erfolgt, oder der Eingliederung eines Synchronismus- und Video-Burst-Darstellungssystems, bei dem zum Erhalten und Darstellen des Synchronismus- und Burst-Signals eine Signalabtastung mit einer Geschwindigkeit erfolgt, die niedriger als die doppelte Bandbreite des abzutastenden Signals ist.

Im Allgemeinen basieren die Messvorrichtungen zur Überprüfung der Qualität von TV- und Rundfunksignalen gewöhnlich auf der Demodulation von Funkkanälen, die sich auf Frequenzspektren zwischen 5 MHz und 2,5 GHz befinden. Diese Vorrichtungen werden zum Messen von TV- und Rundfunksignalen in Sammelverteilungen - gemeinsame Telekommunikationsinfrastrukturen (ICT) - verwendet, bei denen sowohl die Anzahl der Kanäle als auch die Art der Signale (analog, digital, COFDM, QAM, QPSK) immer weiter zunimmt. Dies macht das Messverfahren schwieriger, da je nach Art des zu messenden Signals (analog oder digital) eine Änderung der Option an der Messvorrichtung erforderlich ist. Dies bringt einen zusätzlichen Prozess bei jeder Messung mit sich, was für den Fall, in dem es erforderlich ist, eine bestimmte Anzahl von Messungen durchzuführen, wie es bei einer Einrichtung mit TV- und Radiokanalverteilung (ICT) der Fall ist, einen erheblich größeren Aufwand und einen erheblichen Zeitverlust bedeutet.

Die Aufgabe der vorliegenden Erfindung ist es, eine Telekommunikationssignalmessvorrichtung zu schaffen, die Messungen und Prüfungen von Fernseh- und/oder Radioeinrichtungen (ICT) erleichtert.

Diese Aufgabe wird mithilfe der in den Ansprüchen definierten Erfindung gelöst.

Die Erfindung weist mehrere Vorteile auf.

In einem erfindungsgemäßen Beispiel gliedert die Telekommunikationssignalmessvorrichtung, insbesondere für Fernsehfunksignale, ein System ein, das erkennt, ob der zu messende Kanal ein analoger oder ein digitaler Kanal ist, dadurch gekennzeichnet, dass das System, das erkennt, ob der zu messende Kanal ein analoger Kanal oder ein digitaler Kanal ist, einen ersten Filterblock und einen zweiten Filterblock und einen Detektor enthält und die über den ersten und den zweiten Filterblock durchgeführten Messungen vergleicht, wobei je nach der Differenz zwischen beiden Messungen festgelegt wird, ob der zu messende Kanal analog oder digital ist.

Dies weist den Vorteil auf, dass es dem Benutzer vor der Durchführung einer Messung ermöglicht ist zu erkennen, ob der zu messende Kanal ein analoger oder digitaler Kanal ist, mit der wohlbekannten Zeitersparnis bei der Messung, da die durchzuführenden Messungen unabhängig vom Eingangskanal vorbestimmt und ein automatisches Messsystem geschaffen werden kann.

In einem anderen Beispiel ist die Telekommunikationssignalmessvorrichtung, insbesondere für Fernsehfunksignale, gemäß der Erfindung dadurch gekennzeichnet, dass der erste Filterblock eine Bandbreite aufweist, die zumindest fünf Mal größer als der zweite Filterblock ist.

In einem anderen Beispiel ist die Telekommunikationssignalmessvorrichtung, insbesondere für Fernsehfunksignale, gemäß der Erfindung dadurch gekennzeichnet, dass der erste Filterblock durch einen einzigen Filter gebildet ist.

In einem anderen Beispiel ist die Telekommunikationssignalmessvorrichtung, insbesondere für Fernsehfunksignale, gemäß der Erfindung dadurch gekennzeichnet, dass der zweite Filterblock durch einen einzigen Filter gebildet ist.

Dies weist den Vorteil auf, dass eine Verwirklichung einer Telekommunikationssignalmessvorrichtung mit den Kennzeichen der Erfindung einfacher und zuverlässiger ermöglicht ist.

In einem anderen Beispiel ist die Telekommunikationssignalmessvorrichtung, insbesondere für Fernsehfunksignale, gemäß der Erfindung dadurch gekennzeichnet, dass die Vorrichtung, sobald der analoge oder digitale Kanal erkannt ist, die entsprechenden, vom Benutzer programmierten Messungen durchführt.

Dies weist den Vorteil auf, dass die Telekommunikationssignalmessvorrichtung zu einer Vorrichtung umgewandelt ist, die die automatische Durchführung der Messungen unabhängig von der Art des zu messenden Kanals ermöglicht.

Das Verfahren zur Erkennung eines analogen und/oder digitalen Kanals gemäß der Erfindung besteht darin, verschiedene Messungen auf einer vorher präzise definierten, einzigen Frequenz des Kanals durchzuführen. Die Messung erfolgt mittels eines Zwischenfrequenzerkennungsschmalbandfilters und mittels eines Breitbandfilters.

Die Frequenz, auf der die Messung erfolgt, muss bezüglich der Frequenz des Videoträgers eines Analogfernsehstandardkanals (z.B. CCIR) ausreichend versetzt sein, sodass sie mit einem Zwischenfrequenzerkennungsschmalbandfilter (Schmalbandfilter) nicht erkannt werden kann, jedoch mit einem geeigneten Filter (Breitbandfilter) erkannt werden kann.

Die Energie eines Analogsignalträgers ist auf bestimmten Frequenzen konzentriert. Mithilfe der Verwendung von konkreten Auswahlfiltern auf derselben Frequenz kann auf die Signalart, analog oder digital, geschlossen werden.

Die mit jedem der Filter (Breitbandfilter, Schmalbandfilter) erhaltenen Messungen sind im Falle eines analogen Kanals sehr unterschiedlich, da der Breitbandfilter im Gegensatz zu der mit dem Schmalbandfilter durchgeführten Messung den Großteil der Energie des Trägers erkennt. Im Fall des digitalen Kanals entsprechen die Energieunterschiede der beiden Messungen, da kein analoger Videoträger vorhanden ist, der gemessenen Energiedifferenz des Gaußschen weißen Rauschens (durch das sich ein digitales Signal annähern kann) und entsprechen ungefähr einer Differenz von: 10*log (BW breit/BW schmal) dB.

Somit führt bei der Telekommunikationssignalmessvorrichtung, insbesondere für Fernsehfunksignale, gemäß der Erfindung ein Erkennungsalgorithmus zwei einzelne Messungen auf einer vorgegebenen Frequenz, die vom analogen Träger versetzt ist, mit zwei verschiedenen Erkennungsfiltern durch, und die Entscheidungsfindung folgt folgenden Schritten:

Wenn die mit dem Breitbandfilter durchgeführte Messung eine bestimmte Schwelle nicht übersteigt, kann die Erkennung nicht ausgeführt werden.

Wenn sich die Differenz der mit dem Breitbandfilter und dem Schmalbandfilter durchgeführten Messung 10*log (BW breit/BW schmal) dB annähert, ist das Signal von einem digitalen Kanal, im gegenteiligen Fall ist es analog.

Als Überprüfung wird im analogen Fall bestätigt, dass die Messdifferenz eine Schwelle übersteigt, und im digitalen Fall kann eine dritte Messung mit einem dritten Filter durchgeführt werden, die ungefähr die vorige Formel erfüllen muss.

Es wird nun ein nicht einschränkendes Beispiel einer Telekommunikationssignalmessvorrichtung, insbesondere für Fernsehfunksignale, gemäß der Erfindung auf der Grundlage der beiliegenden Figuren beschrieben.
Figur 1 zeigt ein Blockdiagramm einer Telekommunikationssignalmessvorrichtung gemäß der Erfindung.
Figur 2 zeigt eine schematische Konfiguration einer Telekommunikationssignalmessvorrichtung gemäß der Erfindung.
Figur 3 zeigt ein Ausführungsschema von digitalen Messungen einer Telekommunikationssignalmessvorrichtung gemäß der Erfindung.
Figur 4 zeigt eine praktische Ausführung eines Erkennungssystems für analoge und digitale Kanäle einer Telekommunikationssignalmessvorrichtung gemäß der Erfindung.

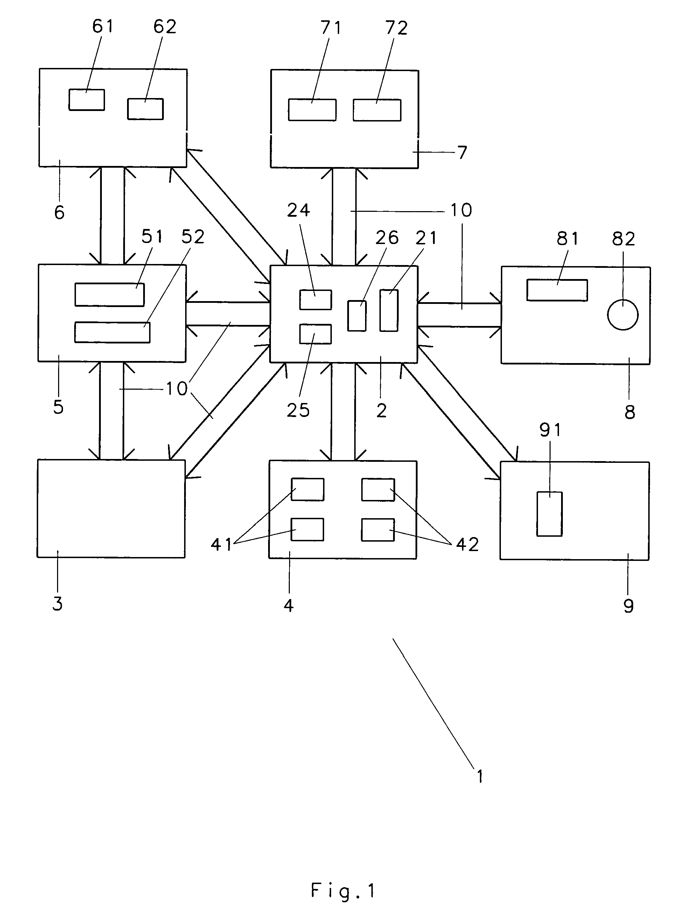

Figur 1 zeigt ein allgemeines Blockdiagramm einer Telekommunikationssignalmessvorrichtung 1, insbesondere für Fernsehfunksignale, gemäß der Erfindung. Wie in der Figur gut zu erkennen, ist der zentrale Block 2 der Vorrichtung 1 durch einen Mikroprozessor 21, der die gesamte Steuerung und Verarbeitung von Messungen der Vorrichtung 1 durchführt, einen flüchtigen Speicher 24 zur Speicherung der durchgeführten Messungen, einen nichtflüchtigen Speicher 25 zur Speicherung von Programmen und einen A/D-Wandler 26 gebildet.

Ein Block 3 ist für die Durchführung der Hauptmessungen zuständig, enthält das Messungserfassungssystem und formt unter Spannung jegliche Messung um, für die er programmiert ist. Diese Spannung wird vom A/D-Wandler 26 gelesen.

Ein Block 4 bildet das Modul für digitale Messungen und gliedert die Abstimmgeräte 41 und Demodulatoren 42 der digitalen Signale verschiedener QAM- und COFDM-Modulationen auf dem terrestrischen Fernsehband (47 bis 860 MHz) und QPSK auf dem Satellitenfernsehen-Signalverteilungsband (950 bis 2400 MHz) ein. Die Demodulatoren 41 sehen BER-Messinformation und andere Parameterarten zu den vorhergehenden Signalen vor.

Ein Block 5 führt die Verarbeitung des Signals zu seiner Sichtbarmachung aus und ist durch einen Video-Prozessor 51 und einen Audio-Prozessor 52 gebildet.

Ein Block 6 ist durch einen Anzeigebildschirm 61 und einen Lautsprecher 62 gebildet.

Ein Block 7 ist für die Energieversorgung und Energieversorgungsverwaltungssysteme zuständig, damit die Vorrichtung selbständig funktioniert, und durch ein selbständiges Versorgungsverwaltungssystem 71 und ein Modul mit externer Versorgung 72 gebildet.

Ein E/A-Schnittstellenblock 8 ist durch eine Tastatur 81 und Drehsteuerung 82 gebildet.

Ein Block 9 ist durch Erweiterungssteckplätze 91 für mögliche neue Messungsentwicklungen gebildet.

Die verschiedenen Blöcke 2, 3, 4, 5, 6, 7, 8 und 9, die die Vorrichtung bilden, sind mithilfe von Anschlusselementen 10 angeschlossen.

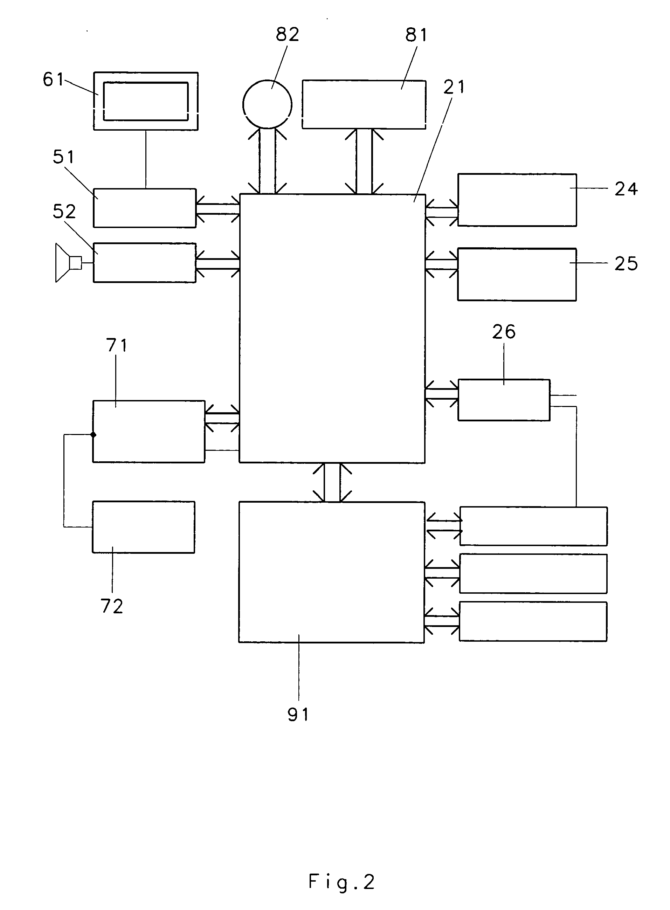

Wie aus Figur 2 zu entnehmen, ist der Mikroprozessor ("Steuerwerk") 21 der funktionelle Kern der Vorrichtung 1. Er ermöglicht es, ihre funktionellen Prozesse durchzuführen, führt ein Programm aus, das im nichtflüchtigen Speicher 25 (FLASH-Speicher) gespeichert ist und extern über einen RS232-Kommunikationsport und eine Anwendung programmiert sein kann, die in einem externen PC ausgeführt wird. Neben dem Programmcode sind in dem nichtflüchtigen Speicher 25 die Konfigurationen und aufgeschobenen Messungen der Vorrichtung 1 zu ihrer anschließenden Untersuchung in einem PC gespeichert.

Sobald der Programmcode eingelesen ist, lädt der Mikroprozessor 21 diesen Code in einen flüchtigen Speicher 24 (SDRAM), damit seine Ausführung schneller erfolgt und die Speicherung von variablen Datenstrukturen ermöglicht ist.

Der Mikroprozessor 21 weist eine Verbindung mit einem A/D-Wandler 26 auf, der die Umwandlungen Spannung-Digitaldaten zu ihrer späteren Speicherung und Verarbeitung vornimmt. Zur Ermöglichung der Erweiterung der Vorrichtung 1 wurde ein A/D-Wandlermodell (26) mit ausreichenden Analogeingängen zur Durchführung dieser Aufgabe gewählt.

Ein Audio-Prozessor 52 führt die Akustikalarmfunktionen aus, die die Vorrichtung 1 unter verschiedenen Umständen zu erstellen imstande ist: niedriger Ladepegel des selbständigen Versorgungssystems, außerhalb des Messbereichs erfasste Messungen usw.

Der Video-Prozessor 51 führt alle Menümischungsfunktionen aus, die der Mikroprozessor 21 erstellt, da zu den Funktionen des Mikroprozessors 21 die grafische Erstellung des Fenster- und Menüsystems für die Bedienung der Vorrichtung 1 gehört.

Der Video-Prozessor 51 gibt schließlich das Videosignal wieder, das auf einem TFT-Anzeigebildschirm 61 angezeigt wird.

Ein selbständiges Versorgungsverwaltungssystem 71 führt die Energieverwaltungsprozesse der Vorrichtung 1 aus. Diese kann über ein System von Batterien verschiedener Art, Größe und Gewichts und eine externe Versorgung 72 versorgt sein. Das Batteriesystem verleiht der Vorrichtung 1 Selbständigkeit an Orten, an denen die Versorgung von außen nicht verfügbar ist.

Das selbständige Versorgungsverwaltungssystem 71 steuert außerdem den Grad der Ladung des Batteriesystems derart, dass es feststellt, wann die Batterien aufgeladen werden müssen, oder den Zeitpunkt berücksichtigt, zu dem sie vollständig aufgeladen sind.

Die Vorrichtung 1 weist Erweiterungssteckplätze 91 für zukünftige Entwicklungen auf. Hier ist die Wachstumsfähigkeit der Vorrichtung für spezifische Messungsentwicklungen hervorzuheben.

Die externe Benutzeroberfläche enthält die Tastatur 81 und die Drehsteuerung 82 zur Navigation durch Menüs innerhalb der Software der Vorrichtung 1. Es sind bestimmte Schnellzugriffstasten auf bestimmte, gängigere Funktionen definiert und LED-Leuchtanzeigen zur Identifizierung der kritischeren Funktionen (angeschalteter Zustand, Ladung des Batteriesystems, Vorhandensein der äußeren Versorgungsvorrichtung usw.) beinhaltet.

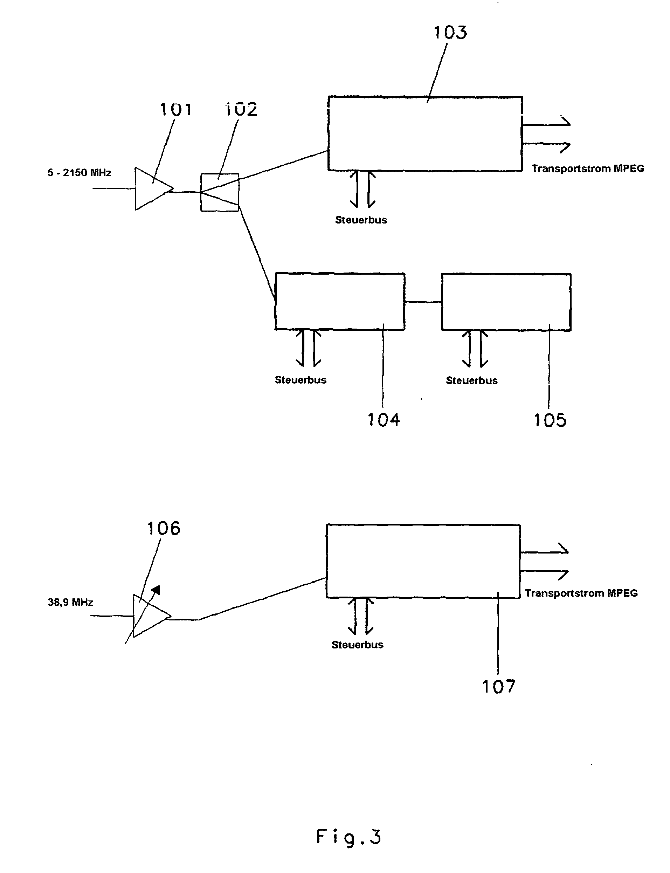

Figur 3 zeigt das Ausführungsschema von digitalen Messungen der Vorrichtung
1. Wie in der Figur gut zu erkennen, werden zwei Signale zugeleitet, ein Mehrbandsignal (5 bis 2150 MHz) zur Demodulation von COFDM- und QPSK-Signalen und eines zur Demodulation von QAM-Signalen auf Zwischenfrequenz von 38,9MHz.

Wie zu erkennen ist, durchläuft das Signal von 5 bis 2150 MHz einen Mehrbandverstärker 101 und danach einen Selektor 102, der der das Signal zum QPSK-Abstimmgerät-Demodulator 103 oder aber zum COFDM-Abstimmgerät 104 und COFDM-Demodulator 105 verzweigt. Der QPSK-Abstimmgerät-Demodulator 103 leitet die TS MPEG Transportsignale zu. Die BER-bezügliche Information wird über den Steuerbus erhalten. Der COFDM-Block verfährt genauso, nur sind die Blöcke Abstimmgerät 104 und Demodulator 105 getrennt.

Das 38,9-MHz-Signal durchläuft einen Verstärker 106 mit variablem Verstärkungsfaktor, der durch Aufwärtsregelung (CAG) betrieben ist und darauf einwirkt. Dieses Signal wird im QAM-Demodulatorblock 107 verarbeitet, der an seinem Ausgang das MPEG-Transportsignal zuleitet. Wie beim vorhergehenden Block werden die BER-bezüglichen Daten über den Steuerbus erhalten.

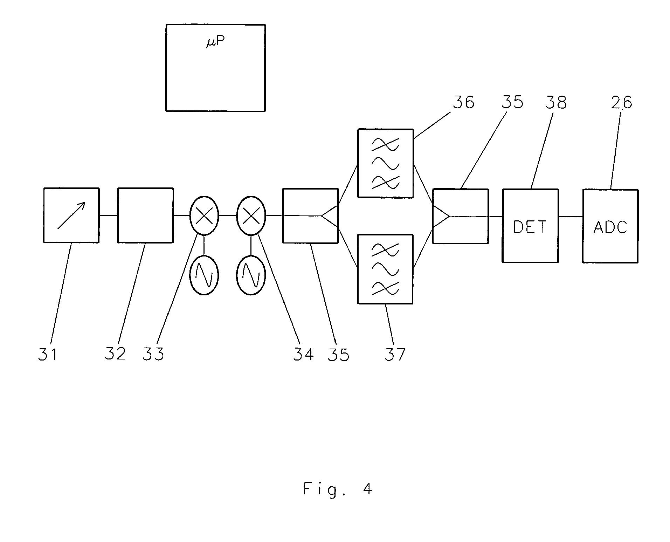

Figur 4 zeigt eine praktische Ausführung eines Erkennungssystems für analoge und digitale Kanäle einer Telekommunikationssignalmessvorrichtung gemäß der Erfindung. Wie in der Figur gut zu erkennen, ist das Erkennungssystem für analoge und digitale Kanäle durch einen Dämpfer 31 gebildet, der das Funkfrequenzsignal von zwischen 5 und 2150 MHz dämpft, um es an die erforderlichen Mischpegel anzupassen. Ein Abstimmgerät 32 stimmt den ausgewählten Kanal auf die Videoträgerfrequenz plus einen Zuwachs ab. Der Wert des Zuwachses hängt davon ab, ob sich der Kanal auf dem terrestrischen Band (z.B. 5 bis 862 MHz) oder auf dem Satellitenband (z.B. 950 bis 2150 MHz) befindet. Ein erstes Mischgerät 33 formt das Signal auf eine Zwischenfrequenz von beispielsweise 38,9 MHz um, und mithilfe eines zweiten Mischgeräts 34 wird eine zweite Zwischenfrequenz von beispielsweise 10,7 MHz erhalten. Ein Satz Schalter 35 wählt einen ersten Filterblock bzw. Filter 36 oder einen zweiten Filterblock bzw. Filter 37 aus. Der erste Filterblock 36 ist durch zumindest einen Breitbandfilter (z.B. 3 MHz) gebildet. Der zweite Filterblock 37 ist durch zumindest einen Schmalbandfilter (z.B. 250 KHz) gebildet. Die Bandbreite BW1 des ersten Filterblocks 36 muss zumindest fünf Mal so groß wie die Bandbreite BW2 des zweiten Filterblocks 37 sein.

Wenn der erste Filterblock 36 ausgewählt ist, erholt sich die Energie des Videoträgers teilweise, falls das Signal einem analogen Fernsehkanal entspricht, wobei im Detektor 38 ein LF1-Signalpegel erhalten wird. Wenn der zweite Filterblock 37 ausgewählt ist, erholt sich die Energie des Videoträgers des analogen Kanals nicht, wobei im Detektor 38 ein LF2-Signalpegel erhalten wird. Die Pegeldifferenz LF1-LF2 muss über einem bestimmten Wert liegen, um zu folgern, dass der zu messende Kanal ein analoger Kanal ist.

Für den Fall eines digitalen Kanals beträgt die im Detektor 38 erkannte Differenz zwischen der mithilfe des ersten Signalsblocks 36 und des zweiten Signalblocks 37 durchgeführten Messung ungefähr 10log (BW1/ BW2), wobei BW1 bzw. BW2 die Bandbreiten des ersten bzw. zweiten Filterblocks 36 und 37 sind.

Insbesondere ist die Vorrichtung bzw. der Detektor 38 und das Steuerwerk (Mikroprozessor µP, 21) wie folgt ausgestaltet: der Detektor 38 und das Steuerwerk µP arbeiten in der Weise zusammen, dass ein erstes Signal LF1, das einen Signalpegel am Ausgang des ersten Filters 36 bezeichnet, und ein zweites Signal LF2, das einen Signalpegel am Ausgang des zweiten Filters 37 bezeichnet, in der Weise miteinander verknüpft werden, dass für einen ersten Fall, bei dem die Differenz (LF1-LF2) der beiden Signale LF1, LF2 im wesentlichen größer als 10 db ist , ein Kanal als analoger Kanal erkannt wird. Für einen zweiten Fall, bei dem die Differenz (LF1-LF2) der beiden Signale LF1, LF2 im wesentlichen gleich 10 log (BW1/BW2) ist, insbesondere in der Größenordnung von 2 bis 3 db, wird ein Kanal als digitaler Kanal erkannt.
Die Energie eines Analogfernsehsignals entspricht im wesentlichen der Energie der Videoträgerfrequenz; die Energie eines Digitalfernsehsignals verteilt sich homogen über jeweils einen Kanal.

Das Breitbandfilter 36 bewirkt, dass der Signalpegel (Videoträgerfrequenz) am Ausgang im Falle eines Analogsignals relativ hoch ist , während das Schmalbandfilter 37 bewirkt, dass der Signalpegel am Ausgang im Falle eines Analogsignals relativ niedrig ist. Die Differenz LF1 - LF2 ist relativ groß, liegt in Abhängigkeit der konkreten Ausgestaltung der Filter in der GröOenordnung von mindestens 10 dB, insbesondere in der GröOenordnung von 20 bis 30 dB.

Im Falle eines Digitalsignals hängen die Signalpegel an dem Ausgängen der Filter 36 und 37 ausschließlich von deren Bandbreiten BW1, BW2 ab. Im Falle idealer Filter läge die Differenz LF1 - LF2 bei 10 log (BW1/BW2), realiter liegt sie, in Abhängigkeit der konkreten Ausgestaltung der Filter in der Größenordnung von 2 bis 3 dB.

Mithilfe eines A/D-Wandlers 26 werden die Differenzen der erkannten Pegel digitalisiert und an einen Mikroprozessor übertragen, der die analoge oder digitale Beschaffenheit des zu messenden Fernsehkanals bestimmt und die Messungen festlegt, die gemäß der Art des Kanals (analog/digital) durchzuführen sind. Auf diese Art und Weise führt die Vorrichtung, wenn der analoge oder digitale Kanal erkannt ist, die entsprechenden, vom Benutzer programmierten Messungen durch.

### Bezugszeichenliste

- 1: Messvorrichtung
- 2: zentraler Block
- 21: Mikroprozessor ("Steuerwerk")
- 24: flüchtiger Speicher
- 25: nichtflüchtiger Speicher
- 26: A/D-Wandler
- 3: Block: Durchführung der Hauptmessungen
- 4: Block: Modul für digitale Messungen
- 41: Abstimmgeräte
- 42: Demodulatoren
- 5: Block: Verarbeitung des Signals zu seiner Sichtbarmachung
- 51: Video-Prozessor
- 52: Audio-Prozessor
- 6: Block: Bildschirm und Lautsprecher
- 61: Anzeigebildschirm
- 62: Lautsprecher
- 7: Block: Verwaltung der Versorgungssysteme
- 71: Selbständiges Versorgungsverwaltungssystem
- 72: externes Versorgungsmodul
- 8: Block: E/A-Schnittstelle
- 81: Tastatur
- 82: Drehsteuerung
- 9: Block: Erweiterungssteckplätze
- 91: Erweiterungssteckplätze
- 10: Anschlusselemente
- 101: Mehrbandverstärker
- 102: Selektor
- 103: Abstimmgerät-Demodulator
- 104: Abstimmgerät
- 105: Demodulator
- 106: Verstärker mit variablem Verstärkungsfaktor
- 107: Demodulatorblock
- 31: Dämpfer
- 32: Abstimmgerät
- 33: Erstes Mischgerät
- 34: Zweites Mischgerät
- 35: Schalter
- 36: Erster Filterblock (Breitband)
- 37: Zweiter Filterblock (Schmalband)
- 38: Detektor

## Patentansprüche

1. Telekommunikationssignalmessvorrichtung, insbesondere für Rundfunk- und Fernsehfunksignale, mit einem System, das erkennt, ob ein zu messender Kanal ein analoger oder ein digitaler Kanal ist, **dadurch gekennzeichnet, dass** das System, das erkennt, ob der zu messende Kanal ein analoger Kanal oder ein digitaler Kanal ist, ein erstes Filter (36) mit einer ersten Bandbreite (BW1), ein zweites Filter (37) mit einer zweiten Bandbreite (BW2), einen Detektor (38) und ein Steuerwerk (µP) enthält, und dass der Detektor (38) und das Steuerwerk (µP) in der Weise zusammenarbeiten, dass ein erstes Signal (LF1), das einen Signalpegel am Ausgang des ersten Filters (36) bezeichnet, und ein zweites Signal (LF2), das einen Signalpegel am Ausgang des zweiten Filters (37) bezeichnet, in der Weise miteinander verknüpft werden, dass für einen ersten Fall, bei dem die Differenz (LF1-LF2) der beiden Signale (LF1, LF2) im wesentlichen größer als 10 db ist, ein Kanal als analoger Kanal erkannt wird, und dass für einen zweiten Fall, bei dem die Differenz (LF1-LF2) der beiden Signale (LF1, LF2) im wesentlichen gleich 10 log (BW1/BW2) ist, insbesondere in der Größenordnung von 2 bis 3 db, ein Kanal als digitaler Kanal erkannt wird.

2. Telekommunikationssignalmessvorrichtung nach Anspruch 1, **dadurch gekennzeichnet, dass** die erste Bandbreite (BW1) des ersten Filters (36) mindestens fünf Mal größer als die zweite Bandbreite (BW2) des zweiten Filters (37).

3. Telekommunikationssignalmessvorrichtung nach einem der vorhergehenden Ansprüche, **dadurch gekennzeichnet, dass** das erste Filter (36) durch ein einziges Filter gebildet ist.

4. Telekommunikationssignalmessvorrichtung nach einem der vorhergehenden Ansprüche, **dadurch gekennzeichnet, dass** das zweite Filter (37) durch ein einziges Filter gebildet ist.

5. Telekommunikationssignalmessvorrichtung nach einem der vorhergehenden Ansprüche, **dadurch gekennzeichnet, dass** die Vorrichtung in der Weise ausgestaltet ist, dass die Vorrichtung, sobald der analoge oder digitale Kanal erkannt ist, von einer Bedienperson programmierten Messungen durchführt.
